Europäisches Patentamt

European Patent Office

Office européen des brevets

(19)

(11) Numéro de publication : **0 192 507**
**B1**

(12) **FASCICULE DE BREVET EUROPÉEN**

(45) Date de publication du fascicule du brevet :
27.07.88

(51) Int. Cl.⁴ : **B 29 C 53/82**, B 29 C 33/38,
B 29 C 53/60, B 29 C 33/52

(21) Numéro de dépôt : 86400091.4

(22) Date de dépôt : 17.01.86

(54) Procédé de fabrication d'une pièce creuse de forme complexe en matériau composite.

(30) Priorité : 25.01.85 FR 8501068

(43) Date de publication de la demande :
27.08.86 Bulletin 86/35

(45) Mention de la délivrance du brevet :
27.07.88 Bulletin 88/30

(84) Etats contractants désignés :
BE DE GB IT NL SE

(56) Documents cités :
FR-A-  670 453
FR-A- 2 077 555
GB-A-  932 052
LU-A-   29 221
US-A- 2 517 902
US-A- 3 409 579
TECHNISCHE RUNDSCHAU, vol. 63, no. 38, 10 septembre 1971, pages 25-30; L. ARATO: "Senkrechte GFK-Behälter"

(73) Titulaire : **SOCIETE NATIONALE INDUSTRIELLE AEROSPATIALE Société dite:**
**37 Boulevard de Montmorency**
**F-75781 Paris Cedex 16 (FR)**

(72) Inventeur : **Lansalot, Jean Paul**
**6 rue du Docteur Corvisart**
**F-33160 Saint-Medard-en-Jalles (FR)**

(74) Mandataire : **Mongrédien, André et al**
**c/o BREVATOME 25, rue de Ponthieu**
**F-75008 Paris (FR)**

EP 0 192 507 B1

## Description

La présente invention concerne un procédé de fabrication d'une pièce creuse de forme complexe en matériau composite, par bobinage sur un mandrin de filaments imprégnés de résine.

Les pièces creuses en matériau composite sont utilisées actuellement dans des secteurs techniques nombreux et variés tels que les industries aéronautique, spatiale et sous-marine. A titre d'exemple non limitatif, on citera les enveloppes de propulseurs des engins balistiques ainsi que certains types de bouteilles et de réservoirs.

Toutes les techniques de fabrication de telles pièces ont en commun l'utilisation d'un mandrin sur lequel on vient bobiner des filaments imprégnés de résine, la polymérisation ultérieure de cette dernière conférant à la pièce sa rigidité.

D'une manière générale, le mandrin utilisé doit pouvoir résister aux efforts de bobinage et de polymérisation du matériau composite, qui engendrent un taux de compression pouvant atteindre 20 bars. Il doit aussi pouvoir être retiré ou détruit après la phase finale de polymérisation de la résine, sans risque de détérioration de la pièce. Par ailleurs, le procédé d'obtention de tels mandrins doit permettre d'assurer la précision et la reproductibilité des formes d'un mandrin à l'autre. Il doit également permettre l'intégration des protections thermiques internes et des embases métalliques dans le cas particulier de la fabrication d'enveloppes de propulseurs. De plus, le coefficient de dilatation du mandrin doit être comparable à celui de l'acier de façon à ne pas créer de dilatation différentielle entre le mandrin et l'arbre porteur durant les phases de polymérisation à chaud du matériau composite. Une bonne stabilité dans le temps des caractéristiques physico-chimiques du mandrin permet son stockage sans qu'il subisse de dégradation en atmosphère humide en particulier en attendant d'être utilisé.

Actuellement, les pièces en matériau composite sont fabriquées par des techniques différentes selon leurs dimensions. Ces techniques se distinguent toutefois par la nature du mandrin utilisé, qui doit pouvoir être démonté ou détruit lorsque la pièce est terminée.

Une première technique connue consiste à utiliser un mandrin mécanique démontable constitué par un arbre central sur lequel sont fixés des secteurs verrouillés sur cet arbre. Cette technique s'applique à la réalisation de pièces relativement petites et notamment de diamètre compris entre 300 mm et 650 mm et de longueur comprise entre 0,3 m et 1 m. Ce type de mandrin a pour double avantage d'être réutilisable et d'autoriser des pressions de fabrication élevées. En revanche, il a pour inconvénient que des chocs risquent de détériorer l'enveloppe en matériau composite lors du démontage et que son coût est très élevé. En outre, lorsqu'une protection thermique doit être intégrée dans la pièce à fabriquer, comme c'est notamment le cas pour les enveloppes de propulseur, cette protection thermique est rapportée sur le mandrin monté, avant bobinage, selon une technique qui est difficile à maîtriser. Enfin, la forme géométrique du mandrin présente des défauts de profil qui engendrent des variations géométriques des pièces réalisées.

Une autre technique actuellement utilisée, dite technique « Arényl », consiste à utiliser un mandrin obtenu par empilage d'au moins deux éléments distincts préalablement moulés, puis durcis en étuve pendant 48 heures. Cette technique peut s'appliquer à des pièces de plus grande dimension, notamment d'un diamètre compris entre 300 mm et 2 000 mm et d'une longueur comprise entre 0,3 m et 2,5 m. Elle a pour principal inconvénient que les conditions de durcissement du matériau constituant le mandrin ne permettent pas de réaliser celui-ci en un seul élément, car ce matériau ne peut pas être polymérisé en moule fermé en raison des problèmes de dégazage intervenant lors de son étuvage. Le nombre d'éléments du mandrin étant lié à ces problèmes de dégazage et à sa longueur, cette technique, qui pourrait théoriquement être employée pour des pièces de plus grande dimension, s'avèrerait alors d'un coût très élevé. De plus, la cuisson du matériau nécessite des investissements en outillages et moyens d'étuvage importants et, de surcroît, de fortes consommations d'énergie liées à de longs cycles de fabrication.

Une troisième technique connue, utilisée exclusivement pour la fabrication de pièces de grandes dimensions, c'est-à-dire d'un diamètre supérieur à 2 000 mm et de grande longueur, consiste à utiliser un mandrin réalisé au moyen de coques mécaniques assemblées par boulonnage. Ces coques sont revêtues d'un garnissage extérieur de plâtre qui est ensuite usiné à la forme souhaitée, après étuvage. Cette technique présente pratiquement les mêmes inconvénients que la technique utilisant un mandrin mécanique démontable, sans en présenter les avantages.

Par ailleurs, le document GB-A-932 052 montre qu'il est connu de fabriquer une pièce creuse en la moulant sur un noyau soluble préalablement moulé avec un matériau formé de sable mélangé à un liant soluble. Le matériau constituant le noyau est ensuite désagrégé.

L'invention a précisément pour objet un nouveau procédé de fabrication d'une pièce creuse en matériau composite utilisant un mandrin répondant aux différents critères énoncés précédemment, dérivé de la technique « Arényl » et pouvant être utilisé à la place de chacune des techniques connues en ne présentant pas les inconvénients de ces techniques et en réduisant de façon sensible les temps et les coûts de production.

A cet effet, il est proposé conformément à l'invention un procédé de fabrication d'une pièce creuse de forme complexe en matériau composite, par bobinage sur un mandrin de filaments imprégnés de résine, ce procédé étant caractérisé en ce qu'il consiste :

— à réaliser un matériau apte à durcir à température ambiante, en malaxant en continu du sable et un liant comprenant une résine formophénolique, à raison d'environ 1,5 % de la masse du sable, polymérisée avec un durcisseur, en présence d'un catalyseur, pour former un aggloméré ;

— à remplir un moule par injection de ce matériau et à compacter ce matériau, pour former un mandrin monobloc soluble ;

— à laisser durcir le mandrin à température ambiante ;

— à démouler le mandrin ;

— à bobiner sur le mandrin les filaments imprégnés de résine ;

— à polymériser la résine afin d'obtenir ladite pièce creuse ; et

— à désagréger le matériau constituant le mandrin.

Selon un mode de réalisation préféré de l'invention, le durcisseur est un diisocyanate et le catalyseur une amine.

Par ailleurs, la dissolution du matériau constituant le mandrin est réalisée de préférence au moyen d'un solvant organique tel que le diméthylformamide, la pipéridine, le tétrahydrofuranne et la butanone.

Selon un aspect intéressant de l'invention, la désagrégation du mandrin peut être facilitée en ménageant une cavité d'expansion au moyen d'une vessie gonflable ou bien d'un noyau fusible placés dans l'enceinte du moule.

On décrira maintenant, à titre d'exemple non limitatif, un mode de réalisation préféré de l'invention dans lequel :

— la figure 1 est une vue en coupe verticale d'un dispositif pour la fabrication par moulage par injection d'un mandrin soluble monobloc réalisé conformément à l'invention,

— la figure 2 est une vue représentant de façon très schématique l'opération de bobinage de filaments imprégnés de résine sur le mandrin réalisé à l'aide du dispositif de la figure 1,

— la figure 3 est une vue en coupe schématique représentant une installation permettant de dissoudre le matériau constituant le mandrin, après que la résine imprégnant les filaments bobinés sur ce dernier ait été polymérisée, et

— la figure 4 est une vue à plus grande échelle et en coupe partielle de la partie de l'installation de la figure 3 dans laquelle sont reçus la pièce et le mandrin.

Conformément à une caractéristique importante de l'invention, il est proposé de fabriquer le mandrin servant de support aux filaments qui seront ensuite bobinés, puis polymérisés afin de réaliser la pièce proprement dite, par moulage en une seule pièce d'un matériau apte à durcir à température ambiante et pouvant être dissout ultérieurement. En outre, on a vu précédemment que ce matériau doit permettre de réaliser un mandrin répondant à certaines caractéristiques mécaniques et dont la forme soit à la fois précise et reproductible.

Afin de répondre à ces différents critères, on utilise de préférence un matériau comprenant un aggloméré de sable siliceux et d'un liant constitué d'une résine formophénolique polymérisée avec un durcisseur, en présence d'un catalyseur. Pour faciliter le démoulage, le taux de résine est, de préférence, inférieur à 3 % et, par exemple, voisin de 1,5 % de la masse de sable. Le durcisseur peut notamment être un diisocyanate utilisé à raison d'environ 1,5 % de la masse de sable. Le catalyseur peut être une amine, de préférence liquide, utilisée à taux ajustable généralement voisin de 0,06 % de la masse de sable. Une amine gazeuse telle que la diméthyléthylamine pourrait toutefois être également utilisée si l'on accepte les contraintes particulières imposées à la fois par le mode de fabrication et par la toxicité de la diméthylétylamine utilisée lors du gazage du matériau.

On peut notamment utiliser une résine formophénolique du type résole, polymérisée avec un diisocyanate tel que le diisocyanate de diphénylméthane, en présence d'une amine liquide, telle que la (phényl-3 propyl)-4 pyridine.

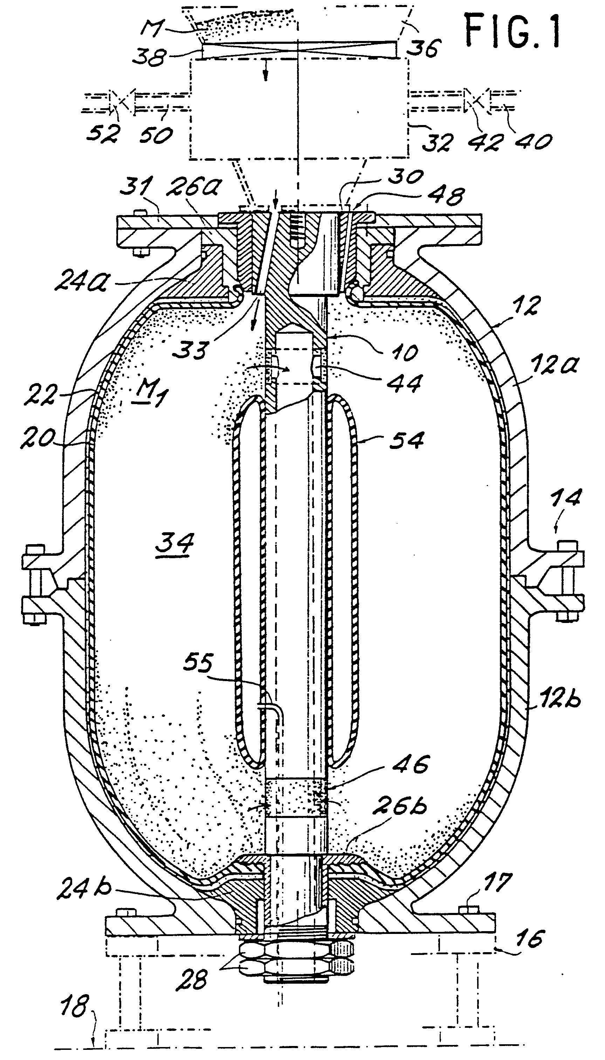

Le durcissement d'un tel matériau se réalise à température ambiante et demande de quelques minutes à 1/2 heure suivant la quantité de catalyseur utilisé. Après malaxage, ce matériau se comportant comme un sable flou, sans lien entre les différents grains qui le constituent, peut alors être injecté immédiatement à l'aide d'air comprimé dans un moule tel que celui qui est représenté sur la figure 1.

Avant de décrire ce dispositif de moulage, on remarquera que différentes modifications peuvent être apportées au matériau utilisé. Ainsi, un gain de masse peut être obtenu en utilisant des matériaux plus légers que le sable tel que des microsphères ou des sels minéraux. De plus, l'incorporation de charges dans les produits de base du matériau utilisé peut permettre de dissoudre le mandrin à l'eau, alors qu'on verra par la suite que le matériau décrit précédemment doit être dissout à l'aide d'un solvant organique tel que le diméthylformamide.

Le dispositif de moulage par injection représenté sur la figure 1 comprend un arbre creux vertical 10 sur lequel sont montées deux demi-coquilles 12a et 12b reliées entre elles par des boulons d'assemblage 14 pour former un moule 12. De façon plus précise, chacune des demi-coquilles supérieure 12a et inférieure 12b est munie d'une bride externe au niveau de leur plan de jonction horizontal et les boulons 14 traversent des trous formés à intervalles réguliers dans chacune de ces brides.

A son extrémité inférieure, la coquille inférieure 12b comporte également une bride externe par laquelle elle repose sur un support 16 sur lequel elle est fixée par exemple par des boulons 17. Le support 16 est lui-même fixé sur un socle horizontal 18 dont la mobilité éventuelle permet d'assurer le transport de l'ensemble.

De préférence, l'intérieur du moule 12 est garni d'une vessie interne d'étanchéité 20, réalisée en une seule pièce, notamment en caoutchouc butyl d'épaisseur constante, par exemple d'environ 1,5 mm. Cette vessie a notamment pour fonction d'éviter tout contact direct entre le matériau constituant le mandrin et un revêtement de protection thermique interne 22 de la pièce à réaliser, lorsque cette dernière est une enveloppe de propulseur. Comme l'illustre la figure 1, cette protection thermique 22 est en effet interposée entre le moule 12 et la vessie 20, cette dernière étant conçue pour résister aux agressions abrasives du sable pendant la phase de moulage par injection ainsi qu'aux actions chimiques du solvant pendant la phase de démoulage.

La vessie interne d'étanchéité 20 assure également la protection d'une embase supérieure 24a et d'une embase inférieure 24b interposée respectivement entre les extrémités supérieure et inférieure des demi-coquilles 12a et 12b et la protection thermique 22. Les embases 24a et 24b font partie, comme la protection thermique interne 22, de la pièce à réaliser, dont elles formeront les extrémités.

Chacune des embases 24a et 24b est montée respectivement dans un protecteur d'embase 26a et 26b assurant à la fois la protection de ces embases et leur centrage mécanique sur l'arbre vertical 10. Les protecteurs d'embase 26a et 26b servent en outre à fixer de façon étanche les extrémités de la vessie interne 20 à l'intérieur du moule 12. A cet effet, on voit sur la figure 1 que l'extrémité supérieure du protecteur d'embase inférieur 26b forme une collerette striée contre laquelle vient s'appliquer le bourrelet d'extrémité inférieur de la vessie 20. Un écrou et un contre-écrou 28 vissés sur l'extrémité inférieure du protecteur d'embase 26b sont serrés contre l'embase inférieure 24b, afin de comprimer de façon étanche la vessie 20 et la protection thermique 22 entre le protecteur d'embase et l'embase.

De façon comparable, le bourrelet formé à l'extrémité supérieure de la vessie 20 est comprimé de manière étanche entre deux parties tronconiques complémentaires formées respectivement à l'extrémité inférieure du protecteur d'embase supérieur 26 et à l'extrémité inférieure d'une pièce de serrage 30 fixée par des vis (non représentées) à l'intérieur du protecteur d'embase 26a. La compression du bourrelet supérieur de la vessie est obtenue par vissage de la pièce de serrage 30 sur le protecteur d'embase 26. Ce dernier comporte une collerette emprisonnée entre l'embase 24a et un couvercle supérieur 31 vissé sur une bride externe formée à l'extrémité supérieure de la coquille 12a.

Afin de permettre le montage et le démontage de l'arbre 10 par le haut du moule 12, l'arbre 10 présente à son extrémité inférieure une partie de petit diamètre qui vient s'emboîter dans le protecteur d'embase inférieur 26b et, à son extrémité supérieure une partie de plus grand diamètre qui vient se loger dans la pièce de serrage 30. Le centrage des embases 24a et 24b et des demi-coquilles 12a et 12b formant le moule est ainsi réalisé par l'intermédiaire des protecteurs d'embases 26a et 26b et de la pièce de serrage 30.

Les protecteurs d'embase 26a et 26b forment avec la vessie 20 un ensemble étanche qui assure la protection mécanique et chimique de la protection thermique interne 22 et des liaisons réalisées de préférence par collage, entre cette protection thermique et les embases 24a et 24b, pendant les opérations de moulage par injection et de démoulage. Cet ensemble permet de plus le positionnement par dépression de la protection thermique 22 et de la vessie 20 à l'intérieur du moule.

L'arbre creux 10 supporte, au-dessus de son extrémité supérieure, un pot de tir 32 constitué par un récipient cylindrique dont le fond en forme de trémie communique par des buses d'injection 33 formées dans l'extrémité supérieure de l'arbre 10 avec l'espace annulaire 34 formé à l'intérieur du moule 12, autour de l'arbre 10. Compte tenu de la tendance de la résine à coller sur les parois, les buses d'injection 33 doivent être correctement disposées et dimensionnées. Ainsi, ces buses doivent être orientées selon une direction proche de l'axe vertical du moule, vers le centre de l'espace 34. Leur diamètre est, de préférence, inférieur à 22 mm. Par ailleurs, pour une section de pièce importante, il est préférable de réaliser les buses sous la forme de trous oblongs, éventuellement équipés de croisillons pour disperser le jet, plutôt qu'une succession de trous de faible diamètre.

Le pot de tir 32 est lui-même surmonté par une trémie tampon 36 servant à alimenter le pot 32 en matériau de moulage M. Cette alimentation est contrôlée par une vanne de remplissage 38. Le matériau M est déversé dans la trémie 36 par un malaxeur continu (non représenté) à axe horizontal alimenté automatiquement en sable et en résine, le taux de résine étant voisin de 1 à 2 %. Dans ce malaxeur, le catalyseur et la résine sont intimement mélangés avant leur introduction dans le sable.

Une tuyauterie 40 d'arrivée d'un gaz propulseur constitué par de l'air comprimé, exempt d'humidité et à une pression de 4 bars, débouche également dans le pot de tir 32. Chaque opération d'injection du mélange de sable fluide dans le moule commandée par l'ouverture d'une vanne d'injection 42 placée dans la tuyauterie 40, dure deux à trois secondes. Cette opération qui permet d'injecter par les buses 33 une quantité donnée du matériau M dans l'espace 34 s'appelle un tir. Une rotation, de préférence automatisée du pot de tir, assure une répartition uniforme du matériau M à l'intérieur de cet espace 34.

Afin d'évacuer l'air comprimé ainsi admis dans l'espace 34, des trous d'échappement 44 sont formés dans la partie de l'arbre creux 10 située à l'intérieur du moule. Ces trous 44 sont munis de filtres 46 servant à retenir dans l'espace 34 le matériau M. Afin de permettre l'évacuation de l'air comprimé en fin de moulage, des trous d'échappement 48 sont également formés dans la pièce de serrage 30 pour faire communiquer l'espace 34 avec l'extérieur. En outre, une canalisation de purge 50 également contrôlée par une vanne 52 débouche elle aussi dans le pot de tir 32.

Le dispositif qui vient d'être décrit en se référant à la figure 1 permet de fabriquer un mandrin $M_1$ par moulage, en injectant dans le moule 12 un matériau M tel que celui qui a été défini précédemment.

Afin d'optimiser les caractéristiques du matériau M et la qualité du profil du mandrin $M_1$ ainsi réalisé, il est souhaitable d'adjoindre à ce dispositif des moyens permettant de parfaire mécaniquement le tassage de ce matériau dans le moule, ce tassage étant déjà en partie réalisé par le mode d'injection du mélange dans le moule.

Dans le mode de réalisation représenté sur la figure 1, ces moyens comprennent une vessie gonflable 54 montée sur la partie centrale de l'arbre 10 et dont le gonflage peut être commandé de l'extérieur par un tuyau 55 reliant le volume interne de la vessie à une source d'air comprimé (non représentée) en passant par l'arbre creux. Au moment de l'injection du matériau M dans l'espace 34, cette vessie 54 est dégonflée. Son gonflage intervenant après le remplissage assure par compression interne le tassement souhaité.

Dans des variantes de réalisation non représentées, le tassement du matériau à l'intérieur du moule peut être réalisé en soumettant celui-ci à des secousses ou à des vibrations, par exemple à l'aide de vérins soulevant lentement le moule avant de le laisser redescendre brutalement. Ces techniques peuvent notamment être utilisées lorsque le diamètre du mandrin est trop petit pour permettre la mise en place d'une vessie gonflable à l'intérieur de celui-ci. Dans ce cas, les secousses ou les vibrations sont appliquées au moule au fur et à mesure de l'injection du matériau M dans celui-ci.

Lorsque les opérations de moulage par injection et de tassage du matériau M constituant le mandrin $M_1$ à réaliser sont terminées, on laisse durcir le mandrin à l'intérieur du moule en atmosphère ambiante (environ 20 °C) pendant environ 2 heures. Il est à noter que la période précédant le début du durcissement et pendant laquelle s'effectue l'injection peut varier de quelques minutes à 1/2 heure suivant le pourcentage et la nature du catalyseur utilisé. Ces données permettent également d'ajuster la durée du durcissement proprement dit.

Par rapport aux techniques utilisées antérieurement, l'utilisation du matériau M défini précédemment permet de réduire de façon considérable le temps de durcissement (environ 48 heures en étuve dans le cas d'une résine thermodurcissable) et de réaliser le mandrin en un seul élément en supprimant tout problème de dégazage.

Lorsque le durcissement du mandrin est terminé, le pot de tir 32 est désolidarisé de l'arbre 10 et les divers éléments constituant le moule 12 sont démontés. L'invention permet à ce stade de réaliser à l'avance des mandrins ne nécessitant pas de condition climatique particulière de stockage et de transport. Ces mandrins, réalisés à l'aide d'un même moule et donc de formes parfaitement identiques, permettent la réalisation de pièces creuses en matériau composite sans avoir à tenir compte des cadences de fabrication des mandrins.

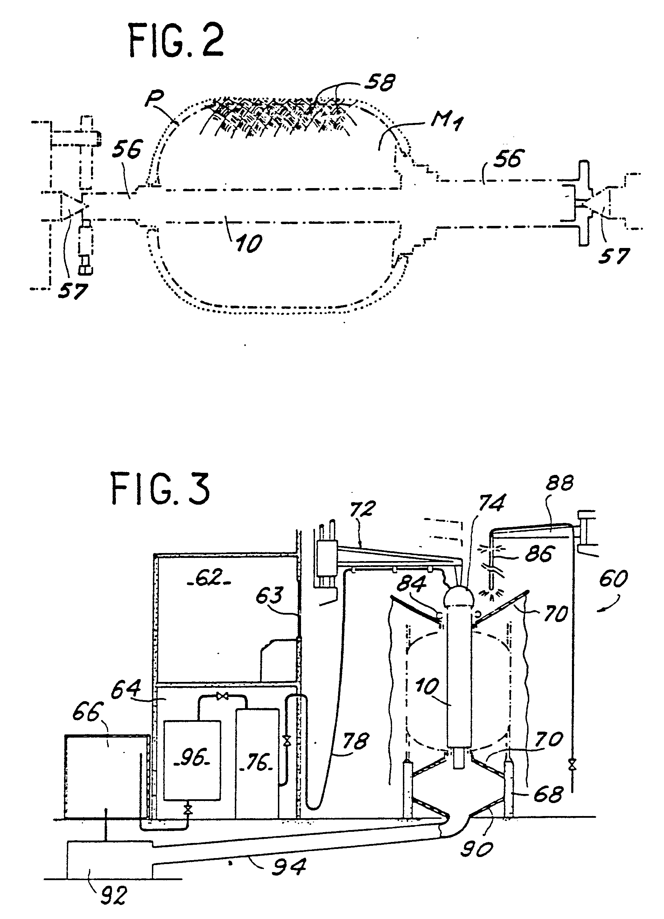

Comme l'illustre de façon schématique la figure 2, lorsqu'une pièce doit être réalisée sur le mandrin, des embouts 56 sont alors fixés à chacune des extrémités de l'arbre 10. Ces embouts peuvent être munis provisoirement de crochets de préhension facilitant le transport du mandrin depuis le poste de moulage et de durcissement jusqu'à un poste de bobinage, lorsque le poids du mandrin empêche toute manipulation manuelle.

Au niveau du poste de bobinage et comme l'illustre très schématiquement la figure 2, ces crochets de préhension sont démontés et le mandrin supporté par l'arbre 10 prolongé par les embouts 56 est monté entre des pointes 57 sur une machine de bobinage se présentant généralement sous la forme d'un tour horizontal. A ce stade et selon la technique du bobinage filamentaire en elle-même bien connue, on bobine sur le mandrin soit des fibres isolées, soit des bandes de tissu constituées de différentes fibres.

Les fibres utilisées peuvent être de toute nature telle que le verre, le kevlar, le carbone, la silice, le carbure de silicium, l'alumino-silicate de bore, l'alumine, etc... Ces fibres sont préimprégnées d'un liant polymérisable et peuvent être séchées ou non. Les liants de nature organique ou métallique sont choisis et combinés avec les fibres de manière à réaliser le matériau composite le plus approprié aux performances recherchées. Dans l'exemple représenté sur la figure 2, des fibres 58 imprégnées de résine thermodurcissable ont été bobinées sur le mandrin selon les techniques connues de bobinage.

A la fin de cette étape de bobinage, le mandrin $M_1$ et la pièce bobinée P qu'il supporte sont transportés dans une étuve. Si le poids de cet ensemble est trop important, son transport peut être effectué au moyen de crochets de préhension fixés aux extrémités des embouts 56.

Bien entendu, la pièce P peut également être réalisée sur le mandrin $M_1$ selon la technique bien connue du drapage.

De façon connue, le chauffage de la pièce en étuve a pour effet de polymériser le liant imprégnant les fibres, ce qui confère à la pièce la rigidité souhaitée.

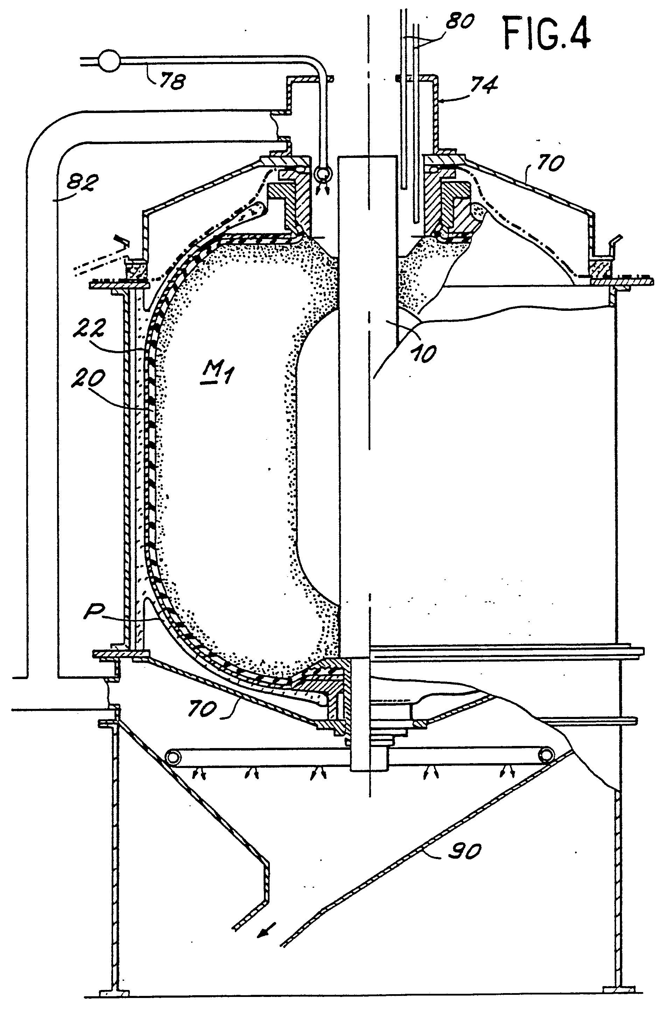

Le mandrin $M_1$ portant la pièce P réalisée est alors transporté jusqu'à une installation de dissolution représentée sur les figures 3 et 4. Comme les transports précédemment décrits, ce transport peut être réalisé en fixant aux extrémités des embouts 56 des crochets de préhension si le poids de l'ensemble constitué par le mandrin et par la pièce le justifie.

Comme l'illustre de façon générale la figure 3, l'installation de dissolution du mandrin $M_1$ ou de démoulage de la pièce $P_1$ comprend un poste de démoulage 60 disposé dans une cellule isolée, un poste de commande 62 ouvrant sur le local de démoulage par une fenêtre vitrée 63, une cellule 64 de stockage des produits comprenant une installation de récupération et de recyclage du solvant et un poste 66 de traitement des rejets comprenant un bac de décantation. Les locaux de démoulage 60 et de stockage 64 sont munis de dispositifs d'aspersion des vapeurs de solvant.

Lors de leur arrivée dans la cellule de démoulage 60, la pièce P, le mandrin M₁ et l'arbre creux 10 noyé dans le mandrin sont disposés verticalement sur un support 68. L'ensemble ainsi constitué est équipé à ses extrémités supérieure et inférieure de dispositifs de protection 70.

Après fermeture de la cellule 60, un bras mécanisé 72 met en place sur la partie supérieure du mandrin une tête 74 d'injection du solvant.

Les solvants utilisés sont des solvants organiques tels que le diméthylformamide, la pipéridine, le tétrahydrofuranne en solution ou non dans l'eau, et la butanone.

Ce solvant est acheminé depuis une cuve de stockage 76 située dans la cellule 64 jusqu'à la tête d'injection 74 par une tuyauterie 78. La dissolution du matériau constituant le mandrin est obtenue par injection d'une quantité de solvant correspondant à environ 12 % à 20 % de la masse du matériau à dissoudre.

L'attaque de la résine par le solvant entraînant un gonflement du matériau, une cavité d'expansion est aménagée autour de l'arbre 10 pour assurer le desserrage des grains de sable et en permettre l'écoulement. Dans le mode de réalisation décrit précedemment en se référant à la figure 1, dans lequel le tassement du matériau est obtenu à l'aide d'une vessie gonflable 54, cette cavité est créée par le dégonflement de cette vessie.

Dans les autres variantes de réalisation évoquées précédemment, un noyau en un matériau tel qu'un polystyrène rendu solidaire de l'arbre 10 avant le moulage donne également naissance à cette cavité par fusion du polystyrène lors de la polymérisation du matériau composite.

Comme l'illustre plus particulièrement la figure 4, la tête d'injection 74 est également équipée de sondes de niveau 80 permettant de contrôler un éventuel débordement du solvant hors de la pièce. En outre, des conduites 82 assurent une ventilation permanente de la tête d'injection 74 et de la zone située en-dessous du protecteur étanche inférieure 70.

Le matériau constituant le mandrin est désagrégé quelques heures après injection du solvant. L'arbre 10 est alors extrait et nettoyé à l'eau chaude par une rampe d'injection 84 (figure 3).

Une lance de nettoyage 86 est ensuite descendue à l'intérieur du passage laissé libre après enlèvement de l'arbre 10, au moyen d'un bras mécanisé 88. L'eau chaude injectée par la lance 86 permet d'évacuer le sable et les effluents et de nettoyer l'intérieur de la vessie 20 protégeant la pièce P. Le sable et les effluents sont repris par une trémie 90 et acheminés jusqu'au bac de décantation 92 du poste de traitement 66 par une conduite 94. Une installation 96 de récupération et de recyclage du solvant logée dans la cellule de stockage 64 permet de séparer le solvant du sable et de récupérer le solvant. Ce dernier est alors transféré dans la cuve de stockage 76 pour être recyclé.

Lorsque les opérations de nettoyage de l'intérieur de la pièce sont terminées, celle-ci peut être sortie de la cellule 60.

Bien entendu, l'invention n'est pas limitée au mode de réalisation qui vient d'être décrit à titre d'exemple, mais en couvre toutes les variantes. Ainsi, bien que les mandrins ont généralement des formes de révolution, ils peuvent aussi présenter toute autre forme, permettant notamment d'obtenir des nervures ou des cloisons internes à la pièce. Par ailleurs, les installations décrites peuvent subir différentes modifications compte tenu notamment des dimensions des pièces à fabriquer ou de la nature des produits utilisés. En ce qui concerne ce dernier point, on rappellera que le sable utilisé pour réaliser le mandrin pourrait être remplacé par des matériaux plus légers tels que des microsphères ou des sels minéraux. De façon comparable, l'introduction de certaines charges dans le matériau constituant le mandrin permettrait d'envisager un démoulage à l'eau à la place des solvants organiques décrits.

Par rapport aux techniques connues, l'invention présente de nombreux avantages techniques et économiques liés notamment à son application à la fabrication précise et reproductible de pièces de dimensions très variables et à la réduction d'environ moitié des coûts de fabrication de ces pièces.

**Revendications**

1. Procédé de fabrication d'une pièce creuse (P) de forme complexe en matériau composite, par bobinage sur un mandrin (M₁) de filaments (58) imprégnés de résine, ce procédé étant caractérisé en ce qu'il consiste :

— à réaliser un matériau (M) apte à durcir à température ambiante, en malaxant en continu du sable et un liant comprenant une résine formophénolique, à raison d'environ 1,5 % de la masse du sable, polymérisée avec un durcisseur, en présence d'un catalyseur, pour former un agglomérat ;

— à remplir un moule (12) par injection de ce matériau (M) et à compacter ce matériau, pour former un mandrin monobloc soluble (M₁) ;

— à laisser durcir le mandrin (M₁) à température ambiante ;

— à démouler le mandrin ;

— à bobiner sur le mandrin les filaments (58) imprégnés de résine ;

— à polymériser la résine afin d'obtenir ladite pièce creuse (P) ; et

— à désagréger le matériau (M) constituant le mandrin (M₁).

2. Procédé selon la revendication 1, caractérisé en ce que le durcisseur est un diisocyanate, utilisé à raison de 1,5 % de la masse de sable.

3. Procédé selon la revendication 2, caractérisé en ce que le durcisseur est le diisocyanate de diphénylméthane.

4. Procédé selon l'une quelconque des revendications 1 à 3, caractérisé en ce que le catalyseur est une amine utilisée à taux ajustable, généralement voisin de 0,06 % de la masse de sable.

5. Procédé selon la revendication 4, caractérisé en ce que le catalyseur est la (phényl-3-propyl)-4-pyridine.

6. Procédé selon l'une quelconque des revendications précédentes, caractérisé en ce qu'on désagrège le matériau (M) constituant le mandrin (M₁) au moyen d'un solvant organique.

7. Procédé selon la revendication 6, caractérisé en ce que le solvant organique est choisi dans le groupe comprenant le diméthylformamide, la pipéridine, le tétrahydrofuranne et la butanone.

8. Procédé selon l'une quelconque des revendications 1 à 7, caractérisé en ce que la désagrégation du mandrin est facilitée en ménageant une cavité d'expansion dans l'enceinte du moule (12).

9. Procédé selon la revendication 8, caractérisé en ce qu'on ménage la cavité d'expansion en dégonflant une vessie gonflable.

10. Procédé selon la revendication 8, caractérisé en ce qu'on ménage la cavité d'expansion en faisant disparaître par fusion un noyau en matériau fusible tel qu'un polystyrène.

## Claims

1. Process for producing a hollow part (P) of complex shape from composite material by winding filaments (58) impregnated with resin onto a mandrel (M₁), this process being characterized in that it involves :
— producing a material (M) capable of hardening at ambient temperature by the continuous mixing of sand and a binder comprising a formophenolic resin in a proportion of approximately 1.5 % of the mass of the sand, polymerized with a hardener, in the presence of a catalyst, to form a conglomerate ;
— filling a mould (12) as a result of the injection of this material (M) and compacting this material to form a soluble one-piece mandrel (M₁) ;
— allowing the mandrel (M₁) to harden at ambient temperature ;
— removing the mandrel from the mould ;
— winding the filaments (58) impregnated with resin onto the mandrel ;
— polymerizing the resin to obtain the said hollow part (P) ; and
— disintegrating the material (M) constituting the mandrel (M₁).

2. Process according to Claim 1, characterized in that the hardener is a diisocyanate used in a proportion of 1.5 % of the mass of sand.

3. Process according to Claim 2, characterized in that the hardener is diphenylmethane diisocyanate.

4. Process according to any one of Claims 1 to 3, characterized in that the catalyst is an amine used in an adjustable proportion, usually in the neighbourhood of 0.06 % of the mass of sand.

5. Process according to Claim 4, characterized in that the catalyst is (phenyl-3-propyl)-4-pyridine.

6. Process according to any one of the preceding claims, characterized in that the material (M) constituting the mandrel (M₁) is disintegrated by means of an organic solvent.

7. Process according to Claim 6, characterized in that the organic solvent is selected from the group comprising dimethylformamide, piperidine, tetrahydrofuran and butanone.

8. Process according to any one of Claims 1 to 7, characterized in that the disintegration of the mandrel is made easier by providing an expansion cavity within the containment of the mould (12).

9. Process according to Claim 8, characterized in that the expansion cavity is provided by deflating an inflatable bladder.

10. Process according to Claim 8, characterized in that the expansion cavity is provided by causing a core of meltable material, such as a polystyrene, to disappear as a result of melting.

## Patentansprüche

1. Verfahren zur Herstellung eines komplex geformten Hohlkörpers durch Wickeln von harzgetränkten Filamenten (58) auf einen Dorn (M₁), wobei dieses Verfahren dadurch gekennzeichnet ist, daß es umfaßt :
— ein bei Umgebungstemperatur aushärtendes Material (M) herzustellen, indem fortlaufend Sand und ein Bindemittel, welches ein mit einem Härter in Gegenwart eines Katalysators polymerisiertes Formophenolharz in einer Menge von ungefähr 1,5 % der Masse des Sandes enthält, vermischt wird, um ein Agglomerat zu erhalten,
— eine Form (12) durch Einspritzen dieses Materials (M) zu füllen und dieses Material zu verdichten, um einen auflösbaren Dorn (M₁) aus einem Stück zu bilden,
— den Dorn (M₁) bei Umgebungstemperatur aushärten zu lassen,
— den Dorn zu entformen,
— auf den Dorn harzgetränkte Filamente (58) zu wickeln,
— das Harz zu polymerisieren, um den genannten Hohlkörper (P) zu erhalten, und
— das den Dorn (M₁) bildende Material (M) aufzulösen.

2. Verfahren nach Anspruch 1, dadurch gekennzeichnet, daß der Härter ein Diisozyanat ist, der in einer Menge von 1,5 % der Masse des Sandes verwendet wird.

3. Verfahren nach Anspruch 2, dadurch gekennzeichnet, daß der Härter Diphenylmethandiisocyanat ist.

4. Verfahren nach irgendeinem der Ansprüche 1 bis 3, dadurch gekennzeichnet, daß der Katalysator ein Amin ist, welches mit einstellbarer Menge, im allgemeinen nahe bei 0,06 % der Masse des Sandes verwendet wird.

5. Verfahren nach Anspruch 4, dadurch gekennzeichnet, daß der Katalysator (Phenyl-3-propyl)-4-pyridin ist.

6. Verfahren nach irgendeinem der vorhergehenden Ansprüche, dadurch gekennzeichnet, daß man das den Dorn (M₁) bildende Material (M) mit einem organischen Lösungsmittel löst.

7. Verfahren nach Anspruch 6, dadurch gekennzeichnet, daß das organische Lösungsmittel aus der Gruppe gewählt ist, welche umfaßt Dimethylformamid, Piperidin, Tetrahydrofuran und Butanon.

8. Verfahren nach irgendeinem der Ansprüche 1 bis 7, dadurch gekennzeichnet, daß das Lösen des Dorns erleichtert wird, indem in der Formkammer (12) ein Ausdehnungshohlraum vorgesehen wird.

9. Verfahren nach Anspruch 8, dadurch gekennzeichnet, daß man den Ausdehnungshohlraum herstellt, indem man eine aufblasbare Blase abläßt.

10. Verfahren nach Anspruch 8, dadurch gekennzeichnet, daß man den Ausdehnungshohlraum herstellt, indem man durch Schmelzen einen Kern aus einem schmelzbaren Material, wie Polystyren, verschwinden läßt.

**FIG.1**

# FIG. 2

# FIG. 3

FIG.4